# EUROPEAN PATENT SPECIFICATION

(11) **EP 2 216 976 B1**
(45) Date of publication and mention of the grant of the patent: **22.11.2017**
(21) Application number: 09290249.3
(22) Date of filing: 02.04.2009
(51) Int. Cl.: H04M 3/56, G10L 15/18, G10L 21/0264, H04M 3/436

(54) **audio conference comprising perspicuity control**
Audiokonferenz mit Verständlichkeitskontrolle
Conférence audio comprenant un contrôle de compréhension

(30) Priority: 04.02.2009 EP 09290080
(43) Date of publication of application: 11.08.2010
(73) Proprietor: ALCATEL LUCENT, 92100 Boulogne-Billancourt (FR)
(72) Inventor: Wajda, Wieslawa, 75210 Keltern (DE)
(74) Representative: Wetzel, Emmanuelle

(56) References cited:
- EP-A- 1 414 227
- WO-A-00/48379
- WO-A-03/058473
- WO-A-2007/126028
- US-A1- 2004 172 255
- US-A1- 2005 265 535
- US-A1- 2006 067 499
- AOKI P M ET AL: "The Mad Hatter's Cocktail Party: A Social Mobile Audio Space Supporting Multiple Simultaneous Conversations" CHI 2003. CONFERENCE PROCEEDINGS. CONFERENCE ON HUMAN FACTORS IN COMPUTING SYSTEMS. FORT LAUDERDALE, FL, APRIL 5 - 10, 2003; [CHI CONFERENCE PROCEEDINGS. HUMAN FACTORS IN COMPUTING SYSTEMS], NEW YORK, NY : ACM, US, 5 April 2003 (2003-04-05), pages 425-432, XP002276417 ISBN: 978-1-58113-630-2

## Description

The present invention relates to a method of providing an audio communication between two or more telecommunication devices, and a multi-speaker communication environment unit to support said method.
Today's chat rooms allow persons to communicate with each other in a bi-directional manner while information is broadcast from an editor to one or more subscribers of the chat room. Furthermore, today's telecommunication systems allow voice-based tele-conferencing limited to a few participants.

US2004172255 discloses a system providing audio conferences with "virtual room" functionality, and particularly addresses the issue of how should an audio conference be splitted into sub-conferences. That is, which speakers belong together and which ones should be separated, where that is done with resort to acoustic features of the speakers' speech (e. g., "turn-Taking", related utterances, etc.), rather than as a result of participants' explicit requests. A significant drawback of the mentioned telecommunication solutions is a lack of perspicuity control.

It is the object of the present invention to provide an improved audio communication between two or more telecommunication devices.

The object of the present invention is achieved by a method according to claim 1. The object of the present invention is further achieved by a multi-speaker communication environment unit according to claim 10. Said audio communication between two or more telecommunication devices whereby the audio communication enables a simultaneous, bi-directional exchange of audio data between the two or more telecommunication devices can be referred to as a multi-speaker communication environment (= MSCE). The said multi-speaker communication environment unit is a constituent part of the MSCE. The multi-speaker communication environment unit supports a bi-directional communication between multiple (= "multi") speakers under consideration of perspicuity. Therefore, the audio communication is also referred to as MSCE audio communication. It is possible that the multi-speaker communication environment unit is implemented as a computer program product held in a memory of a telecommunication equipment and executed on a processor of the telecommunication equipment. From the software point of view, the multi-speaker communication environment unit may be a software object constituted of a number of member data elements and methods. Furthermore, it is possible that the multi-speaker communication environment unit is implemented as a piece of telecommunication hardware. It is possible that, as stated above, the MSCE is an abstract object implemented either only as a software and executed on a conventional machine or as a hybrid of software and hardware where for example data is stored in a flexible memory and the functions (methods) are all or in part implemented as a dedicated hardware.

The terminal allocation unit performs a terminal allocation mechanism allowing assignment of user equipment (= UE) to the MSCE. The group creation unit performs a mechanism for user grouping. This user grouping mechanism may be particularly useful to provide perspicuity control in case the number of speakers associated with a speaker group of the audio communication is too big or in case one or more parameters characterising the perspicuity of the communication decrease below a predefined threshold or in case of another grouping reason, e.g. privacy considerations. The group creation unit performs a mechanism allowing participants to move from a first speaker group to a second speaker group within the MSCE. A characteristic of the MSCE is the absence of an intrinsic limit for a number of participants in a single MSCE. That means that a feature of the MSCE is its capability to have connected any number of telecommunication devices, i.e. limited by a number representation in a computer hardware, available memory or other general system parameters, and to allow simultaneous conversation between users of these telecommunication devices.

The association of the two or more telecommunication devices with the audio communication may be effected by registering addresses of the telecommunication devices into a routing table which is used for routing audio data within the audio communication or into a participation table specifying the participants of the audio communication. The association of a requesting telecommunication device with a speaker group may be requested by a travelling user or a user with a changed interest, for example if a user hears in a background speaker group an interesting issue and wants to change from his current speaker group to the speaker group where this issue is discussed. The determination of the relationship of a telecommunication device with the two or more speaker groups may comprise a determination to which speaker group the telecommunication device is associated.

The present invention provides an answer to the needs of a society which develops toward pervasive communication. An example of that trend are today's chat rooms, blogs and similar facilities. The present invention provides a great improvement of current communication systems as it makes communication easy and stress-free. The invention allows a new kind of communication where people are able to continuously stay in contact with co-working team members, family, friends, interest groups and other. By means of the present invention, it is also simpler to create virtual offices based on a home office concept. The invention allows stress-free communication in single or multiple groups of interest. The invention combines hands-free and phone communication. Perspicuity is guaranteed even for a great number of speakers.

In case of a conference call or a chat room involving a multitude of participants, the voice of a specific participant is not lost in the talk of the other participants and there is a control over how clearly a specific participant can be heard. What is more, a caller who tries to reach another user on the phone does not encounter a busy ring tone, thus enabling spontaneous or urgent communication. The communication partners are there as long as the users wish and with a feeling that they are close, i.e. the communication connection between two users is maintained as long as the users want to. This makes the busy ring tone superfluous. Hence, the present invention supports lifelike communication.

The present invention makes it possible for a user to use a terminal of another user and have the telecommunication system charge himself for the communication. The present invention allows ubiquitous and task-focused information exchange in small and huge participant groups. The present invention presents a flexible and cost effective telecommunication service and allows spontaneous evolving of a communication group. The present invention improves the way of communicating via telecommunication systems. Users of the present invention are able to stay in touch with each other without the hitherto existing limitations.

The present invention enables a user of a telecommunication network to stay in a flexible but permanent contact with single or multiple groups of interest. The present invention is suited for collaborative working in teams spread across wide area or based on a home office environment. It also allows communication partners living or located at different locations, e.g., family members, members of an interest group, or friends, to keep a close contact. Thus, the invention offers an improved pervasive communication opportunity to a society which shows a need for this kind of communication, as is shown, e.g., by today's trends of chat rooms (cf. Skype), blogs, etc.

Further advantages are achieved by the embodiments of the invention indicated by the dependent claims.

It is possible that the MSCE audio communication is also referred to as a virtual call room. Like in a MSCE, a virtual call room may comprise an audio communication where speech or other data, e.g. audio files, are bi-directionally transferred, respectively, between sets of terminal equipment/user equipment (= UE) connected to the same virtual call room. The connections are created over virtual call rooms.

A telecommunication device is also referred to as terminal equipment (= TE). An existing MSCE can but need not have a TE assigned to it. If it has not, the MSCE will ignore the notification procedure if a device connects to the MSCE. Thereby communication will take place only if more than one device is connected to that MSCE at the same time. This kind of MSCE can be useful for public communication related to specific themes as for example road traffic, neighbour relations, family conversation, collaborative work, etc.

According to an embodiment of the invention, the steps of processing the audio data received from the first telecommunication device and distributing the processed audio data to one or more telecommunication devices of the two or more telecommunication devices further comprises adjusting sound levels of the audio data received from the first telecommunication device and of audio data received from other telecommunication devices of the two or more telecommunication devices to different levels and mixing the adjusted audio data, whereby the different levels are determined by taking into consideration the determined relationship of the first telecommunication device and the determined parameter values, and sending the mixed audio data as said processed audio data to the one or more telecommunication devices of the two or more telecommunication devices. It is possible that audio data received from a telecommunication device associated with a first speaker group will be distributed at a higher signal intensity level to the telecommunication devices associated with the first speaker group but will be distributed with a reduced signal intensity level volume to telecommunication devices associated with other speaker groups.

It is possible that the management of the communication is determined by one or more pre-defined perspicuity levels. It is possible that a terminal user predefines a specific perspicuity level in one or more speaker groups of the communication, e.g. for privacy reasons. For example, a terminal user determines that voice data received from terminal devices associated with a first speaker group are processed so that the voice data are comprehensible only to the users of the terminal devices associated with the first speaker group. Based on this user's determination, the voice data are processed in a way that users of terminal devices associated with another speaker group are not able to understand these voice data.

According to another embodiment of the invention, the method further comprises the steps of determining an orientation of the face of a user associated with the first telecommunication device from where audio data are received, applying the determined orientation of the face as a parameter value of a perspicuity-related parameter describing a focus of the user's attention. The user can wear a telecommunication device, for example a headset, wherein an orientation detector is implemented. Simultaneously, the system must create a virtual call room, where speakers are placed around, for example, around a table.

It is possible that the perspicuity control unit learns from the measured head movements of a user associated with the telecommunication device where face-to-face communication partners of the user are located. For example, when the user talks to a face-to-face communication partner, his head (face) will more frequently point into the direction where the face-to-face communication partner is located than into other directions. When adjusting sound levels of the audio data and mixing the adjusted audio data, the multi-speaker communication environment unit takes into account the determined locations of the face-to-face communication partners to provide the user with a corresponding spatially resolved hearing impression.

It is further possible that the perspicuity control unit uses the learned locations of the face-to-face communication partners for an appropriate placement of remote communication partners, i.e. distant communication partners who communicate with the user via a telecommunication device, as "virtual" face-to-face communication partners. The term "virtual" face-to-face communication partner is to express the fact that the user is given a hearing impression as if the distant communication partners were present as face-to-face communication partners among the "real" face-to-face communication partners, i.e. the near face-to-face communication partners who communicate with the user without a telecommunication device.

According to another embodiment of the invention, the step of associating the two or more telecommunication devices to the audio communication further comprises sending, when associating a telecommunication device with the audio communication, a notification message to one or more telecommunication devices which have already been associated with the audio communication so as to notify the one or more telecommunication devices about the association of the said telecommunication device with the audio communication.

According to another embodiment of the invention, one or more users already connected with the virtual call room and/or the user as owner of the virtual call room are informed when a user enters and/or leaves the virtual call room. This notification may be performed as an announcement, e.g. an audio signal, a verbal notification, a voice announcement, or as a multimedia file, e.g. an optical indication, a video message, an Instant Messaging file. The present invention provides an automatic announcement of an incoming call. Thus, the present invention enables a user to behave in a virtual call room as if in real life: before talking to someone, you "knock at the door" and go into a room. If no user is connected to a virtual call room, the user of the virtual call room can wait for another user while doing something else, e.g. walking the dog, reading, gardening, until he is notified when a user "enters" the virtual call room.

In an embodiment, the method further comprises the step of sending said notification message in a sequential order to the one or more telecommunication devices which have already been associated with the audio communication whereby the sequential order is dependent on one or more attributes of the one or more telecommunication devices.

It is possible that, if a MSCE has at least one TE allocated to it, the MSCE unit informs the owner of the MSCE by sending a "ringing signal" to the TE used by the owner of the MSCE if a user connects to the MSCE. If there is more than one TE allocated to the MSCE, the MSCE unit may notify these TE's in a sequential order, e.g. using one or more following algorithms: "last assigned first", "leased line first", "mobile first", "time window".

According to another embodiment of the invention, the method further comprises the step of controlling an association of a telecommunication device with the audio communication by means of a positive list specifying telecommunication devices which are authorised to become associated with the audio communication and/or a negative list specifying telecommunication devices which are not authorised to become associated with the audio communication. It is possible that the method comprises the step of assigning private and/or public attributes (private/public multi-speaker communication environments) allowing to distinguish if the MSCE can be used by any user of a telecommunication device or only by a restricted group of users. It is further possible that the MSCE unit comprises a mechanism allowing definition of users authorised to use the MSCE audio communication. And it is possible that the method of the present invention comprises the steps of creating a private and/or a public MSCE audio communication.

It is also possible that the method further comprises the steps of assigning a priority to a telecommunication device of the two or more telecommunication devices, and prioritising the processing and/or the distribution of audio data from the telecommunication device which has been assigned the priority with regard to audio data of other telecommunication devices of the two or more telecommunication devices. It is possible that the method according to the present invention comprises the step of allocating priorities to a user so that incoming audio data, e.g. a call, from this prioritised user precede audio data from a user with a lower priority, e.g. disrupt a call from the user with a lower priority or so that incoming audio data from this prioritised user, e.g. a call, force a direct connection between the prioritised user and a callee.

Further, it is possible that the method further comprises the steps of temporarily splitting, on a first request from a telecommunication device of the two or more telecommunication devices, the speaker group of the two or more speaker groups with which the telecommunication device is associated into two or more speaker sub-groups, and on a second request from the telecommunication device of the two or more telecommunication devices or after a pre-determined span of time after the said group splitting, re-joining (= merging) the two or more speaker sub-groups into the initially existing single speaker group. It is also possible that the method of the present invention comprises the step of providing a manual group definition so that two or more users of telecommunication devices speaking inside of the MSCE audio communication are allowed to partition themselves into two or more independent speaker groups.

It is possible that the method allows users talking inside of one MSCE to manually separate for a while into two or more groups of interest with a possibility to easily return back to the previous conversation state.

According to another embodiment of the invention, the method further comprises the steps of recording the audio data received from one or more of the two or more telecommunication devices, and providing, on a request from a telecommunication device of the two or more telecommunication devices, a pre-defined part of the audio data to the requesting telecommunication device. It is possible that a memory unit stores the audio data, preferably sorted according to the origin of the audio data.

It is possible that the MSCE unit comprises a function for assignment of priorities to specific telecommunication devices, so that audio data, e.g. calls, from these telecommunication devices can override other communications being currently in progress. This function can be useful for high importance user relations or in case a user is waiting for a very important message.

According to an embodiment of the invention, the multi-speaker communication environment unit further comprises a subscriber notification unit adapted to send, when associating a telecommunication device with the audio communication, a notification message to one or more telecommunication devices which have already been associated with the audio communication so as to notify the one or more telecommunication devices about the association of the said telecommunication device with the audio communication. The subscriber notification unit performs a subscriber notification mechanism notifying an owner and/or other subscribers allocated to the MSCE in case an new subscriber has been associated with that MSCE. An owner is a participant of the audio communication who has initiated an audio communication or a speaker group of the audio communication or has been assigned priority rights with regard to a control of the audio communication.

According to another embodiment of the invention, the multi-speaker communication environment unit further comprises a group membership unit adapted to control an association of a telecommunication device with the audio communication by means of a positive list specifying telecommunication devices which are authorised to become associated with the audio communication and/or a negative list specifying telecommunication devices which are not authorised to become associated with the audio communication. It is also possible that the MSCE unit supports definition of positive or negative lists of users authorised or respectively not authorised to enter the MSCE. This function is for creation of a private MSCE dedicated to closed groups of users as for example family, team working on a specific project, etc.

According to another embodiment of the invention, the multi-speaker communication environment unit further comprises a time machine unit for call lookup allowing to scroll back in the timeline of a conversation associated with an audio communication and listen to recorded audio data associated with the conversation. The function of the time machine unit allows a user to easily scroll on the time line of, e.g. a last hour or a last day, of a conversation. This function can be useful for protocol purpose, especially if coupled with a voice recognition system, or for repeated listening of not understood or forgotten parts of conversation as, for example, names of participants, numbers, depiction of products or other attributes. It can be also useful to remind a user what was the merit of a conversation taken few days ago.

The aforementioned methods of splitting and merging of speaker groups, signal (= audio data) treatment, distribution of audio data (= signals), and prioritising a telecommunication device, e.g. by a limitation of speaking time assigned to another telecommunication device, - which are referred to in the following as perspicuity control - can be used to improve perspicuity, i.e., the understandability of audio data/signals within a virtual call room. The invention allows to control perspicuity in case there is a big number of speakers speaking simultaneously in a common room.

In case conversation between two or more users associated with telecommunication devices connected to the MSCE is in progress, the MSCE unit monitors if an overlapping of speakers causes a serious degradation of perspicuity. If so, the MSCE unit activates an algorithm separating all the users into two or more groups, where every group of speakers listens the own group members in a foreground and the other groups in a background. The algorithm can be entered recursively. If one new user enters the MSCE during the above situation, the MSCE unit connects him to one of that groups, depending on selection criteria.

According to an embodiment of the invention, particularly as an implementation of said perspicuity control, the speakers in a virtual call room are split into multiple speaker groups based on an understandability coefficient measured as one or more of the following: number of interruptions per second, spectral perceptibility of single vowels and consonants, perceptibility of words or sentences, loudness ratio of foreground and background speakers. The decision to distribute speakers of a call room into smaller groups can be made with the aid of a split/separation decision algorithm. According to the present invention a split/separation decision algorithm can determine how many interruptions per second occur, e.g. how many speakers try to speak concurrently and thus degrade the overall perspicuity. Auxiliary, the separation/split decision algorithm can also use a more complex function as, e.g., a determination of a perceptibility of vowels and consonants under consideration of their spectral redundancy as well as a determination of a perceptibility of whole words or sentences in consideration of linguistic redundancy. Measuring of loudness ratio of foreground to background speakers as a kind of a signal to noise ratio (SNR), can be useful. A number of interruptions per second and/or a spectral perceptibility of single vowels and consonants and/or a perceptibility of words or sentences or a loudness ratio of foreground to background speakers may be referred to as an understandability coefficient.

According to another embodiment of the invention, particularly as an implementation of said perspicuity control, the speaker group is merged with another speaker group to a combined speaker group based on one or more of the following values measured in the first and/or the second speaker group: ratio of silent time to speaking time, number of aborted conversations, number of questions without answer. A consolidation decision to combine and merge, respectively, two or more speaker groups into one bigger speaker group can be controlled by coefficient determined based on one or more of the following: silent time to speaking time, aborted conversations, or questions without answer. A consolidation/merge decision algorithm of the inventive method can be based on a measurement of a disparity between active time, i.e. the time where at least one person is speaking, and a passive time, i.e. the time where nobody says anything. The need of a group consolidation is based on the assumption that the probability for an increase of conversation grows with a number of potential speakers. Other criteria to consolidate (= merge) groups together can also be a number of aborted conversations or questions without an answer, i.e. where someone asks a question and does not receive an answer from the speaker community, i.e. the community of speakers within the speaker room.

The MSCE may also support a group changeover, so that telecommunication devices assigned to users can be moved from a first speaker group to a second speaker group, in case there is more than one speaker group in the MSCE. This group changeover algorithm can be based on a vocal as well as on a graphical or on an alphanumeric interface, depending on the type of used TE. The mechanism of changeover between the speaker groups embodies a function similar to walking around a party room and appeal to different groups of party guests spread across that room.

It is possible that, particularly as an implementation of said perspicuity control, a treatment regarding one or more of the signal-related properties volume, time shift, frequency shift, and spectral characteristics is applied to the signals targeted to be routed to the multiple speaker groups or the combined speaker group. This treatment may provide to shift a speaker's voice into the acoustic foreground. It is possible that a method to shift a speaker's voice to an acoustic foreground is to boost the volume of his voice or, contrary, to attenuate voices of other speakers. In case of the inventive method, the level of amplification and attenuation, respectively, can be selected in such a way that a selected speaker can be heard clearly and can be well understood. At the same time, other speakers can be heard in an acoustic background and can be possibly understood if one concentrates on the background voices. Additionally the level of amplification or attenuation, respectively, can be controlled by a relative distance between a speaker and all the listeners or, preferably, between a speaker and the listener group. The time shift is based on a theoretical approach and can only be used if shifting of a spoken text in time makes sense. The goal of a speaker's voice frequency shift is to enhance the understandability of spoken text by adopting of the speaker's voice spectrum to a hearing characteristic of listeners, e.g. a statistically averaged one. It is possible that the aforementioned adoption is done separately for each individual user of a speaker room. The frequency shift or spectral treatment of a speaker's voice can also be used to mark speaker's affiliation to an organisation or community, in case members of known organisations have to be recognized during the conference. Speaker's affiliation to an organisation can also be marked by a background system voice speaking the name of organisation every time the speaker starts to speak.

According to another embodiment of the invention, particularly as an implementation of said perspicuity control, a distribution of audio data among two or more users connected to the virtual call room is controlled based on one or more of the following criteria, whereby the two or more users are referred to as speakers: speakers' location, i.e. positions of the two or more users, speakers' time of entry into a conversation, speakers' interaction based on a semantic or a temporal correlation, a set of speaker-related attributes. The present invention provides a control over the loudness of the speech of a specific participant. Thus, the present invention provides a control over how clearly a specific participant can be heard in a group communication and improves, also in case of multiple call rooms, the way the voice of a specific participant is perceived. Separation criteria to be used for partitioning of a speaker community into smaller groups, or group creation criteria can be one or more of the following grouping attributes: speaker's location, speaker's time of entry into the conversation, speaker interaction by semantic or time correlation, speaker context understood as a any set of speaker related attributes.

The distribution of audio data among two or more users connected to a virtual call room may be effected by distributing the audio data associated with the users connected to the virtual call room to two or more speaker groups generated within the virtual call room, e.g., in the form of speaker rooms or speaker areas. It is possible that each user of the virtual call room is allocated to at least one of the speaker group. It is possible that a user in a first speaker group of the virtual call room can hear audio data from the other users within the first speaker group in an acoustic foreground, i.e., loud and clear, and audio data from users within a second speaker group of the virtual call room in an acoustic background, i.e. muted and unclear. It is possible that each user connected to the virtual call room changes, at his own request, to another speaker group or be integrated to one or more additional speaker group.

It is possible that, particularly as an implementation of said perspicuity control, the speaking time allocated to a speaker within the virtual call room is limited based on one or more of the following methods: flexibly sharing the conversation time, automatically reducing the speaking volume for all speakers not marked as speaking, fixed time slicing in case of small groups, dynamic speaker lists. These aforementioned methods can provide a speaker interruption control. A speaker interruption control provides a means to avoid interruptions of speakers by other speakers in the same group, e.g. a speaker room (group) or a virtual call room. The method of flexible conversation time sharing is based on dynamic assignment of a specific amount of speaking time to each one speaker at the beginning of his speech. During this time speaker can freely speak and cannot be disturbed by other. After the mentioned time interval has elapsed another speaker can start to speak freely. This speaker will also get assigned the interruption free speak time slice. If the current speaker stops speaking earlier, other speakers are free to speak. Another possibility is to automatically reduce the sound volume for all speakers not marked as speaking. This will allow other speaker candidates so signalise their will to speak, but will not be able to drown the current speaker down. In case of small groups fixed time slicing is possible. In this case the system dynamically assigns speaking time intervals to speakers and informs them with the help of a short sound or another signal. If selected, a speaker can start to speak or he can hand over to the next speaker. In case of a dynamic speaker list, the system remembers if a speaker has tried to say something and puts him on a speaker list. Once the speaker has moved to the first place on the list he will be informed about that fact and is invited to start speaking.

The management of a virtual call room is responsible for the understandability (= perceivability) of a conversation in case of multiple speakers: a satisfactory understandability may be achieved by a limitation of the maximal number of participants, e.g. by partitioning the participants into groups, or by other mechanisms.

It is possible that the method comprises assigning an owner and operator attribute to one or more telecommunication devices allowing to distinguish who owns the MSCE and who is its operator and so to assign some management operations to the owner, some to the operator and some to both.

According to an embodiment of the invention, the method of providing an audio communication further comprises the steps of
1. providing a perspicuity control for the audio communication by means of
   a. a decision to separate speakers into speaker groups based on an understandability coefficient measured as one or more of the following:
      i. number of interruptions per second,
      ii. spectral perceptibility of single vowels and consonants,
      iii. perceptibility of words or sentences,
      iv. loudness ratio of foreground to background speakers
   b. a decision to consolidate a first and a second speaker group into a bigger group based on one or more of the following values measured in the first and/or the second speaker group:
      i. ratio of silent time to speaking time,
      ii. number of aborted conversations,
      iii. number of questions without answer,
      iv. opposite of criteria from (a)
   c. separation criteria based for example on one or more of the following criteria, whereby the two or more users are referred to as speakers:
      i. speakers' location, i.e. positions of the two or more users,
      ii. speakers' time of entry into a conversation,
      iii. speakers' interaction based on a semantic or a temporal correlation,
      iv. speaker context expressed as a metric using a subset of speaker-related attributes,
      v. a meaningful combination of the above,
   d. shifting all other but members of the speaker group which the speaker belongs to into a background by means of one or more of the following:
      i. a volume reduction,
      ii. a time shift,
      iii. a frequency shift,
      iv. a spectral treatment
   e. a speaker interruption control achieved by one or more of the following:
      i. a flexible speaking time sharing,
      ii. a volume reduction for all speakers not marked as speaking,
      iii. a fixed time slicing,
      iv. dynamic speaker lists,
      v. other methods,
2. providing a method allowing speakers to move between speaker groups.

According to an embodiment of the invention, the MSCE unit further comprises a control unit implemented in hardware and or software adapted to transfer signals between telecommunication devices connected to a call room and providing perspicuity control for established communication by means of
a. a decision to separate speakers into speaker groups based on an understandability coefficient measured as for example one or more of the following:
   i. number of interruptions per second,
   ii. spectral perceptibility of single vowels and consonants,
   iii. perceptibility of words or sentences,
   iv. loudness ratio of foreground to background speakers
b. a decision to consolidate a first and a second speaker group into a bigger group based on one or more of the following values measured in the first and/or the second speaker group:
   i. a ratio of silent time to speaking time,
   ii. a number of aborted conversations,
   iii. a number of questions without answer,
   iv. opposite of criteria from (a)
c. separation criteria based on one or more of the following criteria, whereby the two or more users are referred to as speakers:
   i. speakers' location, i.e. positions of the two or more users,
   ii. speakers' time of entry into a conversation,
   iii. speakers' interaction based on a semantic or a temporal correlation,
   iv. speaker context expressed as a metric using a subset of speaker-related attributes,
   v. a meaningful combination of the above,
d. shifting all other but members of the speaker group which the speaker belongs to into a background by means of one or more of the following:
   i. a volume reduction,
   ii. a time shift,
   iii. a frequency shift,
   iv. a spectral treatment,
e. a speaker interruption control achieved by one or more of the following:
   i. a flexible speaking time sharing,
   ii. a volume reduction for all speakers not marked as speaking,
   iii. a fixed time slicing,
   iv. dynamic speaker lists,
   v. other methods,
f. provision of a method allowing speakers to move between speaker groups.

According to an embodiment of the invention, an application to subscribe to the communication service is received from the user of the communication service. An identifier (= ID) for identification of the user with regard to the communication service is sent to the user. The user may use the identifier for his identification when requesting creation of one or more virtual call rooms. It is possible that the user makes use of the identifier for his identification when connecting to another virtual call room associated with another user as owner of the other virtual call room. This will be appropriate, e.g., for the cost transfer from the owner of the call room to the user. According to a standard provision of the present invention, costs caused by communications via a virtual call room are charged to the owner of the virtual call room. A user can also use his ID to automatically invite himself to a virtual call room while connecting to the virtual call room from a non-associated terminal.

These as well as further features and advantages of the invention will be better appreciated by reading the following detailed description of presently preferred exemplary embodiments taken in conjunction with accompanying drawings of which:
- Fig. 1: is a block diagram of an audio communication according to an embodiment of the invention;
- Fig. 2: is a block diagram of a MSCE unit according to an embodiment of the invention;
- Fig. 3: is a diagram of an audio communication according to another embodiment of the invention;
- Fig. 4: is a schematic head of a speaker;
- Fig. 5: is a diagram of a telephone conference; and
- Fig. 6: illustrates an embodiment of perspicuity control.

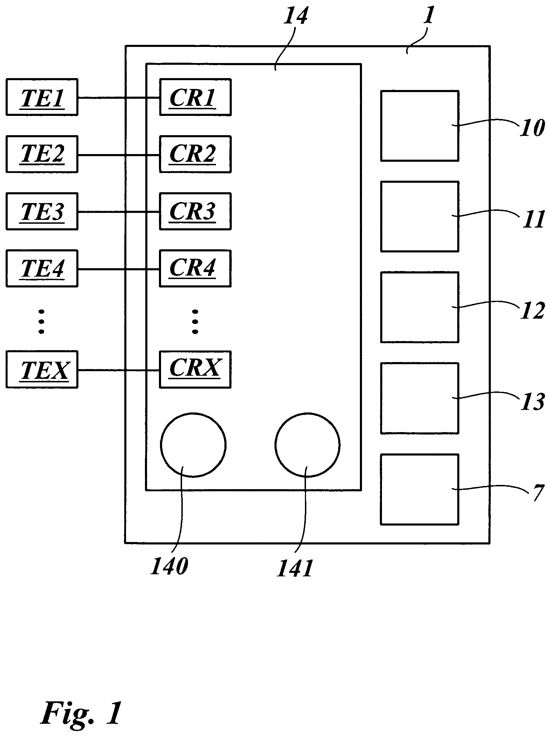

Fig. 1 shows a virtual call room module 1 comprising a call room management subsystem 10, a data transport subsystem 11, a subscriber management subsystem 12, a resource management subsystem 13, a call room unit 14, and a MSCE unit 7. The virtual call room module 1 may be represented by a call room execution engine. The virtual call room execution engine 1 is implemented in a telecommunication network, e.g., a PSTN and/or a packet-based network (PSTN = Public Switched Telephone Network). The call room unit 14 comprises a static call room policy unit 140, a static call room traffic 141, and a plurality of virtual call rooms CR1, CR2, CR3, CR4, ..., CRx, each of the virtual call rooms representing an audio communication according to the present invention. A plurality of telecommunication devices TE1, TE2, TE3, TE4, ..., TEx are connected to the virtual call rooms CR1, CR2, CR3, CR4, ..., CRx. The telecommunication devices TE may be terminals enabling an audio communication, e.g. fixed telephones, mobile telephones, audio-video devices, personal computers, etc.

The call room execution engine 1 manages the virtual call rooms CR1 to CR6. In operation, a virtual call room CR enables and manages a bi-directional broadcasting of speech and other data between all user terminals connected to that call room in consideration of informational perceivability. For simplicity, Fig. 1 shows that each virtual call room CR has allocated one terminal TE. However, it is understood that a virtual call room CR is associated with two or more terminals TE so that an audio communication between the terminals TE associated with the virtual call room CR can be performed.

The data transport subsystem 11 allows connection oriented or connectionless data transfer between the terminals TE1, TE2, TE3, TE4, ..., TEx associated with subscribers and the virtual call rooms CR1, CR2, CR3, CR4, ..., CRx. The call room management subsystem 10 allows operator and/or user controlled creation and deletion of virtual call rooms and static or dynamic binding of one or more virtual call rooms CR1, CR2, CR3, CR4, ..., CRx to any subscriber. The subscriber management subsystem 12 manages subscribers, charges, and the terminals TE1, TE2, TE3, TE4, ..., TEx. Furthermore, the telecommunication system wherein the call room execution engine 1 is implemented comprises a number of access points to which subscribers and/or users can connect their terminals to.

The call room execution engine 1 is composed of one or several inter-linked computers, i.e., a hardware platform, a software platform based on the hardware platform and several application programs executed by the system platform formed by the software and hardware platform. The functionality of the call room execution engine 1 is provided by the execution of these application programs. The application programs or a selected part of these application programs constitute a computer software product providing a communication service as described in this description, when executed on the system platform. Further, such computer software product is constituted by a storage medium storing these application programs or said selected part of application programs.

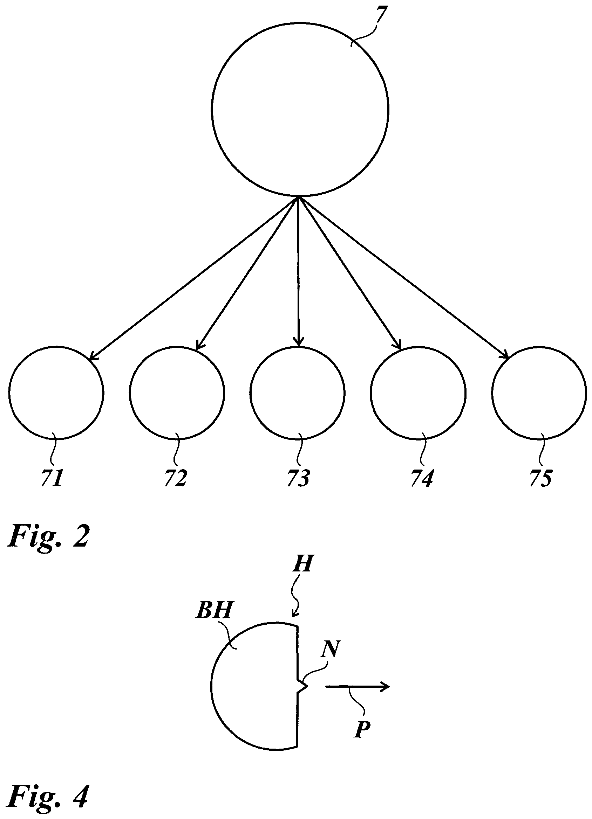

Fig. 2 shows the MSCE unit 7 according to Fig. 1. The MSCE unit 7 comprises a terminal allocation unit 71, a subscriber notification unit 72, a perspicuity control unit 73, a group creation unit 74, and a group membership unit 75.

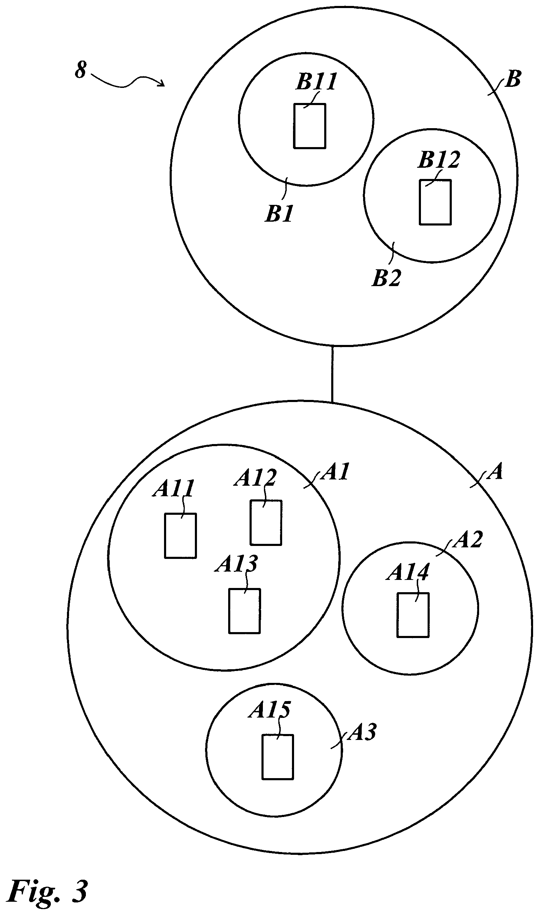

Fig. 3 shows a multi-speaker communication environment 8 involving an audio communication session which is attended by telecommunication devices in an area A and an area B. In the area A, telecommunication devices A11 to A15 take part in the audio communication session, whereby the telecommunication devices A11, A12 and A13 are located at a first location A1, the telecommunication device A14 is located at a second location A2, and the telecommunication device A15 is located at a third location A3 of the area A. In the area B, the telecommunication devices B11, B12 take part in the audio communication session whereby the telecommunication device B11 is located at a first location B1 and a telecommunication device B12 is located at a second location B2 of the area B. The telecommunication devices A11-A15, B11 and B12 form a speaker group. For example, the areas A, B can be geographic regions such as cities or buildings. The locations A1-A3, B1, B2 of the areas A and B, respectively are parts of the areas A, B. For example, if the areas A, B are cities, the locations A1-A3, B1, B2 may be buildings, streets, or cells of a mobile telecommunication network. If the areas A, B are buildings, the locations A1-A3, B1, B2 may be offices or conference rooms.

Fig. 4 shows a schematic head H of a user using a telecommunication device. The user's head H is characterised by the back BH of the head H and the nose N of the head H. The nose N indicates the direction P where the user's attention is focusing, such as for speaking to a listener or for listening to a speaker.

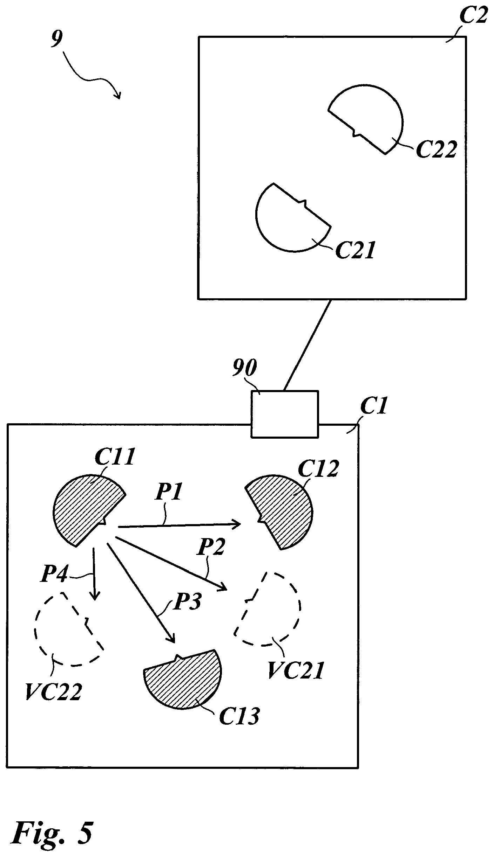

Fig. 5 shows a multi-speaker communication environment 9 comprising an audio communication, e.g. an ongoing audio communication session which may be a telephone conference involving two or more participants. The telephone conference involves users C11, C12 and C13 at a first location C1 and users C21, C22 at a second location C2. The users C11-C13 at the first location C1 and the users C21, C22 at the second location C2 form a speaker group. Each of the participants is associated with one or more telecommunication devices.

For example, the location C1 is a conference room at the headquarters of a company and the location C2 is an office at a branch of the company. The audio communication session has been initiated for talking about a current topic associated with the company. Let us assume that the users C11, C12 and C13 at the first location C1 talk to each other without the help of a telecommunication device but that they use a conference telephone comprising a microphone covering the voices of the users C11, C12 and C13 and a set of loudspeakers installed in the conference room C1 whereby the loudspeakers are capable to provide a spatial hearing impression to at least the user C11. The users C21 and C22 at the location C2 each use a telephone set to communicate with the conference telephone at the location C1. When talking to each other, the users C21 and C22 mute their microphones so that the users C11-C13 at the first location C1 cannot hear them. The audio communication session is controlled by a multi-speaker communication environment unit 90 according to the present invention which comprises a perspicuity control unit. The multi-speaker communication environment unit 90 may be associated with the conference telephone at the location C1, e.g. implemented into the hardware of the conference telephone.

The audio signals which are received at the perspicuity control unit from the users C21 and C22 are adjusted and sent as different intensity signals to the loudspeakers at the conference room C1 so that the user C11 is given the impression as if the users C21 and C22 were present as virtual users VC21 and VC22 within the conference room C1. The user C11 wears an orientation detection device which measures the direction where the face of the user C11 is pointing. The perspicuity control unit learns from the movements of the head of the user C11 where the real users C12 and C13 are located at the first location C1. From this learned directions P1, P3, the perspicuity control unit determines directions P2 and P4 where the virtual users VC21 and VC22 could be placed acoustically so that the user C11 has a spatially resolved hearing impression depending on the origin of the audio data being heard at the moment. For example, if the user C21 is speaking, the user C11 has the impression that the audio data originating from the user C21 come from the direction P2.

The multi-speaker communication environment unit 90 is composed of one or several inter-linked computers, i.e., a hardware platform, a software platform basing on the hardware platform and several application programs executed by the system platform formed by the software and hardware platform. The functionality of the multi-speaker communication environment unit 90 are provided by the execution of these application programs. The application programs or a selected part of these application programs constitute a computer software product providing a control service according to the present invention when executed on the system platform. Further, such computer software product is constituted by a storage medium storing these application programs or said selected part of application programs.

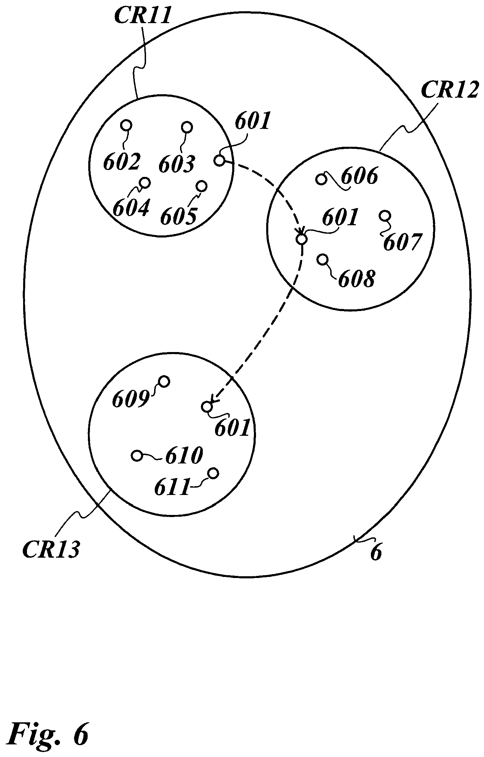

Fig. 6 shows a virtual call room 6, i.e. an audio communication, defined as a global call room, i.e. freely accessible by users 601 to 611 of a telecommunication network. The virtual call room 6 is dedicated to users of the telecommunication network who are interested in the exchange of information on current traffic situations, i.e. especially car drivers. John, a user 601 of the telecommunication network, wants to drive in his car from Pforzheim to the Hahn airport to reach a plane there. John 601 enters the motorway at the junction Pforzheim-West. John 601 is late and the gate time for his plane at the Hahn airport closes in three hours. John 601 enters the global call room 6 and sees on a display of his navigation system which is used as a telecommunication device different coloured areas CR11, CR12, CR13 depicting currently active speaker groups of the virtual call room 6. John 601 hears well few speakers in the vicinity of Karlsruhe, members of a first sub-room CR11, and an acoustically far background of speakers from other speaker groups CR12, CR13. He asks the driver community 602-605 of the first sub-room CR11 for the current traffic situation and gets an answer from a driver 602 on the motorway A5 driving to Basel that there is no traffic jam between Frankfurt and Karlsruhe. Calmed down, John 601 slows a little bit the speed of his car. Now he is sure he will get his plane at time. Then minutes later, somebody cries, Strewth!, a big truck has crashed into the left plank of the motorway and tilted over. John 601 hears tire jar and people crying and speaking one over the other. Few seconds later most voices move to the background and John 601 can well understand what has happened and what is the current situation. The motorway A5 towards Frankfurt is completely blocked for probably the next few hours. John 601 enters this information into the navigation system. A navigation map displays now a new route via Karlsruhe city and the motorway A65. But what is the traffic situation there? John 601 selects the speaker group CR12 in the Karlsruhe area and asks the driver community 606-608 of the speaker group CR12 for traffic information. He gets the answer from the driver 606 that there is no traffic congestion as far as Landau. In between, the situation on the motorway A5 chills out and speaker groups begin to disperse, so while reaching Landau John 601 is a single subscriber to the speaker group CR12. Reaching Neustadt, John 601 hears that there is stagnant traffic in the vicinity of Boehl-Iggelheim so John 601 decides to take the federal road B39 to get to the motorway A63 at Kaiserslautern. About half an hour later John 601 hears a few people who - just as him - are driving to the airport and are in trouble with time. Conversation revives and John 601 sees that he is now in a small speaker group CR13 moving fast on motorway A61 toward the Hahn airport. Somebody starts counting people being on the way to Hahn now. People begin to count, one, two, three, ..., twenty-five, ..., forty-three sounds as a last number. There are forty-three persons trying to catch the same plane at Hahn airport as John 601, so John 601 decides to call the airport, to speak with the responsible person about the current traffic situation, and to ask them to prolong the boarding time by about ten minutes. The airport representative consults the plane crew and reports the crew's approval to John 601. A deep-drawn sigh leaves forty-three gorges. Forty-two sounds of the forty-three sighs are muted by the electronics controlling this speaker group CR13 and only the fastest of them sounds long in forty-three car cabins of the users 601, 609, 610, 611 of this speaker group CR13.

Fig. 6 shows the user 601 in between and connected with slashed lines to the active speaker groups CR11, CR12, CR13. This illustrates that the association of the user 601 to one or more of the active speaker groups CR11, CR12, CR13 be can changed based on the user's 601 request and/or based on a user attribute of the user 601, e.g. his location.

In the following another three examples of usage of the present invention are given.

Use Case 1: A first person and a second person who is a user of a MSCE are driving in a car to a fair trade. On the way, the user notices that he has forgotten his mobile phone. The user asks the first person if the person would allow the user to use the mobile phone of the first person, because the user is awaiting an important call from his office. The first person hands the user his mobile phone and the user allocates the mobile phone to his MSCE by entering the code of association operation and his MSCE ID (ID = identifier). From this moment on, calls directed to the MSCE of the user will be directed to the mobile phone of the first person, and so the user will receive the call from his office on the mobile phone of the first person. Other associations of the mobile phone of the first person are not affected.

Use Case 2: A first person and a second person who is a user of a MSCE are working together in an office room and the user decides to call his friend and to cancel a theatre visit planed for today evening because of an important work on a current project. Because the battery of his own mobile phone is discharged, the user uses an IP Phone of the first person (IP = Internet Protocol). To have a track of a call and not to debit the first person with the call costs, the user enters on the phone of the first person an ID (e.g. IMSI) of the user followed by a hash mark and the ID of the MSCE of his friend (IMSI = International Mobile Subscriber Identity). The conversation between the user and the user's friend will be established using the MSCE of the user and at the user's expense and proceeds as usual.

Use Case 3: A user is driving from a location A to a location B. To be up to date with a current road traffic situation, the user enters a public MSCE dedicated to road traffic information. The user hears a background conversation of drivers spread over the whole road network. The user asks for a current traffic situation related to a route section lying about 30 km in front of him and receives a clear and perspicuous answer from a driver currently passing this route section.

## Claims

1. A method of providing an audio communication (6) between three or more telecommunication devices (601-611) whereby the audio communication (6) enables a simultaneous, bi-directional exchange of audio data between the three or more telecommunication devices (601-611), the method comprising the steps of:
associating the three or more telecommunication devices (601-611) with the audio communication (6);
determining, for the three or more telecommunication devices (601-611), parameter values of one or more parameters related to perspicuity, whereby the term perspicuity is meant to express the fact that audio data/signals, e.g. speakers' voices and other acoustic information, are perspicuous, i.e. clearly presented, in a bidirectional communication so that the audio data/signals can be easily understood, i.e. perceived, by listeners;
grouping the three or more telecommunication devices (601-611) into two or more speaker groups (CR11, CR12, CR13) dependent on the determined parameter values;
on request from a telecommunication device (601) of the three or more telecommunication devices (601-611), changing an association of the requesting telecommunication device (601) with a first speaker group (CR11) of the two or more speaker groups (CR11, CR12, CR13) to an association of the requesting telecommunication device (601) with a second speaker group (CR12) of the two or more speaker groups (CR11, CR12, CR13);
when receiving audio data from a first telecommunication device (601) of the three or more telecommunication devices (601-611), determining a relationship of the first telecommunication device (601) with the two or more speaker groups (CR11, CR12, CR13); and
processing the audio data received from the first telecommunication device (601) and distributing the processed audio data to one or more telecommunication devices (601-611) of the three or more telecommunication devices (601-611) dependent on the determined relationship of the first telecommunication device (601) and on the determined parameter values;
the method being **characterized by** providing a perspicuity control for the audio communication by means of a decision to group speakers into speaker groups based on an understandability coefficient measurement comprising: number of interruptions per second, spectral perceptibility of single vowels and consonants, perceptibility of words or sentences, loudness ratio of foreground to background speakers.

2. The method of claim 1,
**characterised in**
**that** the steps of processing the audio data received from the first telecommunication device (601) and distributing the processed audio data to one or more telecommunication devices (601-611) of the three or
more telecommunication devices (601-611) further comprises the steps of:
adjusting sound levels of the audio data received from the first telecommunication device (601) and of audio data received from other telecommunication devices (602-611) of the three or more telecommunication devices (601-611) to different levels and mixing the adjusted audio data, whereby the different levels are determined by taking into consideration the determined relationship of the first telecommunication device (601) and the determined parameter values; and
sending the mixed audio data as said processed audio data to the one or more telecommunication devices (601-611) of the three or more telecommunication devices (601-611).

3. The method of claim 1,
**characterised in**
**that** the method further comprises the steps of:
determining an orientation (P1-P4) of the face of a user associated with the first telecommunication device (601) from where audio data are received;
applying the determined orientation (P1-P4) of the face as a parameter value of a perspicuity-related parameter describing a focus of the user's attention.

4. The method of claim 1,
**characterised in**
**that** the step of associating the three or more telecommunication devices (601-611) to the audio communication (6) further comprises the step of: when associating a telecommunication device (601) with the audio communication (6), sending a notification message to one or more telecommunication devices (602-605) which have already been associated with the audio communication (6) so as to notify the one or more telecommunication devices (602-605) about the association of the said telecommunication device (601) with the audio communication (6).

5. The method of claim 4,
**characterised in**
**that** the method further comprises the step of:
sending said notification message in a sequential order to the one or more telecommunication devices (602-605) which have already been associated with the audio communication (6) whereby the sequential order is dependent on one or more attributes of the one or more telecommunication devices (602-605).

6. The method of claim 1,
**characterised in**
**that** the method further comprises the step of:
controlling an association of a telecommunication device (601) with the audio communication (6) by means of a positive list specifying telecommunication devices (601-611) authorised to become associated with the audio communication (6) and/or a negative list specifying telecommunication devices (601-611) not authorised to become associated with the audio communication (6).

7. The method of claim 1,
**characterised in**
**that** the method further comprises the steps of:
assigning a priority to a telecommunication device (601) of the three or more telecommunication devices (601-611); and
prioritising the processing and/or the distribution of audio data from the telecommunication device (601) which has been assigned the priority with regard to audio data of other telecommunication devices (602-611) of the two or more telecommunication devices (601-611).

8. The method of claim 1,
**characterised in**
**that** the method further comprises the steps of:
on a first request from a telecommunication device (601) of the three or more telecommunication devices (601-611), temporarily splitting the speaker group (CR11) of the two or more speaker groups (CR11, CT12, CR13) with which the telecommunication device (601) is associated into two or more speaker sub-groups; and
on a second request from the telecommunication device (601) of the three or more telecommunication devices (601-611) or after a pre-determined span of time after the said group splitting, re-joining the two or more speaker sub-groups into the initially existing single speaker group (CR11).

9. The method of claim 1,
**characterised in**
**that** the method further comprises the steps of:
recording the audio data received from one or more (601-605) of the three or more telecommunication devices (601-611); and
on a request from a telecommunication device (601) of the three or more telecommunication devices (601-611), providing a pre-defined part of the audio data to the requesting telecommunication device (601).

10. A multi-speaker communication environment unit (7) for providing an audio communication (6) between three or more telecommunication devices (601-611) whereby the audio communication (6) enables a simultaneous, bi-directional exchange of audio data between the three or more telecommunication devices (601-611), the multi-speaker communication environment unit (7) comprising a terminal allocation unit (71) adapted to associate the three or more telecommunication devices (601-611) with the audio communication (6); a group creation unit (74) adapted to group the three or more telecommunication devices (601-611) into two or more speaker groups (CR11, CR12, CR13) dependent on the determined parameter values and, on request from a telecommunication device (601) of the three or more telecommunication devices (601-611), change an association of the requesting telecommunication device (601) with a first speaker group (CR11) of the two or more speaker groups (CR11, CR12, CR13) to an association of the requesting telecommunication device (601) with a second speaker group (CR12) of the two or more speaker groups (CR11, CR12, CR13); and a perspicuity control unit (73) adapted to determine, for the three or more telecommunication devices (601-611), parameter values of one or more parameters related to perspicuity, whereby the term perspicuity is meant to express the fact that audio data/signals, e.g. speakers' voices and other acoustic information, are perspicuous, i.e. clearly presented, in a bidirectional communication so that the audio data/signals can be easily understood, i.e. perceived, by listeners, adapted to determine, when receiving audio data from a first telecommunication device (601) of the three or more telecommunication devices (601-611), a relationship of the first telecommunication device (601) with the two or more speaker groups (CR11, CR12, CR13), and process the audio data received from the first telecommunication device (601) and distribute the processed audio data to one or more telecommunication devices (601-611) of the three or more telecommunication devices (601-611) dependent on the determined relationship of the first telecommunication device (601) and on the determined parameter values;
**characterized by** providing a perspicuity control for the audio communication by means of a decision to group speakers into speaker groups based on an understandability coefficient measurement comprising: number of interruptions per second, spectral perceptibility of single vowels and consonants, perceptibility of words or sentences, loudness ratio of foreground to background speakers.

11. The multi-speaker communication environment unit (7) of claim 10,
**characterised in**
**that** the multi-speaker communication environment unit (7) further comprises a subscriber notification unit (72) adapted to send, when associating a telecommunication device (601) with the audio communication (6), a notification message to one or more telecommunication devices (602-605) which have already been associated with the audio communication (6) so as to notify the one or more telecommunication devices (602-605) about the association of the said telecommunication device (601) with the audio communication (6).

12. The multi-speaker communication environment unit (7) of claim 10,
**characterised in**
**that** the multi-speaker communication environment unit (7) further comprises a group membership unit (75) adapted to control an association of a telecommunication device (601) with the audio communication (6) by means of a positive list specifying telecommunication devices (601-611) which are authorised to become associated with the audio communication (6) and/or a negative list specifying telecommunication devices (601-611) which are not authorised to become associated with the audio communication (6).

## Patentansprüche

1. Verfahren zum Bereitstellen einer Audiokommunikation (6) zwischen drei oder mehr Kommunikationsvorrichtungen (601-611), wobei die Audiokommunikation (6) den gleichzeitigen, bidirektionalen Austausch von Audiodaten zwischen den drei oder mehr Telekommunikationsvorrichtungen (601-611) gestattet, wobei das Verfahren die folgenden Schritte umfasst:
Verbinden der drei oder mehr Telekommunikationsvorrichtungen (601-611) mit der Audiokommunikation (6);
Bestimmen, für die drei oder mehr Telekommunikationsvorrichtungen (601-611), von Parameterwerten von einem oder mehreren Parametern, die mit Verständlichkeit zu tun haben, wobei der Begriff Verständlichkeit so gemeint ist, dass er die Tatsache ausdrückt, dass Audiodaten/-signale, zum Beispiel Lautsprecherstimmen und andere akustische Informationen verständlich sind, d. h. klar dargestellt werden in einer bidirektionalen Kommunikation, sodass die Audiodaten/-signale von Zuhörern leicht verstanden, d. h. wahrgenommen werden können;
Gruppieren der drei oder mehr Telekommunikationsvorrichtungen (601-611) in zwei oder mehr Lautsprechergruppen (CR11, CR12, CR13), die von den bestimmten Parameterwerten abhängen;
auf Anfrage von einer Telekommunikationsvorrichtung (601) der drei oder mehr Telekommunikationsvorrichtungen (601-611), Ändern einer Verbindung der anfordernden Telekommunikationsvorrichtung (601) mit einer ersten Lautsprechergruppe (CR11) der drei oder mehr Lautsprechergruppen (CR11, CR12, CR13) hin zu einer Verbindung der anfordernden Kommunikationsvorrichtung (601) mit einer zweiten Lautsprechergruppe (CR12) der zwei oder mehr Lautsprechergruppen (CR11, CR12, CR13);
wenn Audiodaten von einer ersten Telekommunikationsvorrichtung (601) der drei oder mehr Telekommunikationsvorrichtungen (601-611) empfangen werden, Bestimmen einer
Beziehung der ersten Telekommunikationsvorrichtung (601) zu den zwei oder mehr Lautsprechergruppen (CR11, CR12, CR13); und
Bearbeiten der Audiodaten, die von der ersten Telekommunikationsvorrichtung (601) empfangen worden sind, und Verteilen der bearbeiteten Audiodaten auf ein oder mehr Telekommunikationsvorrichtungen (601-611) der drei oder mehr Telekommunikationsvorrichtungen (601-611) in Abhängigkeit von der bestimmten Beziehung der ersten Telekommunikationsvorrichtung (601) und von den bestimmten Parameterwerten;
wobei das Verfahren **gekennzeichnet ist durch** das Bereitstellen einer Verständlichkeitskontrolle für die Audiokommunikation mittels einer Entscheidung zum Gruppieren von Lautsprechern in Lautsprechergruppen auf Grundlage einer Messung eines Verständlichkeitskoeffizienten, umfassend: die Anzahl von Unterbrechungen pro Sekunde, die spektrale Wahrnehmbarkeit von einzelnen Vokalen und Konsonanten, die Verständlichkeit von Worten oder Sätzen, das Lautstärkeverhältnis von Vordergrund- zu Hintergrundlautsprechern.

2. Verfahren nach Anspruch 1, **dadurch gekennzeichnet, dass** die Schritte der Bearbeitung der Audiodaten, die von der ersten Telekommunikationsvorrichtung (601) empfangen worden sind, und das Verteilen der bearbeiteten Audiodaten auf eine oder mehrere Telekommunikationsvorrichtungen (601-611) der drei oder mehr Telekommunikationsvorrichtungen (601-611) weiterhin die folgenden Schritte umfasst:
Einstellen der Lautstärke der Audiodaten, die von der ersten Telekommunikationsvorrichtung (601) empfangen werden, und von Audiodaten, die von anderen Telekommunikationsvorrichtungen (602-611) der drei oder mehr Telekommunikationsvorrichtungen (601-611) empfangen werden, auf verschiedene Niveaus und Mischen der eingestellten Audiodaten, wobei die verschiedenen Niveaus bestimmt werden durch Berücksichtigen der bestimmten Beziehung der ersten Telekommunikationsvorrichtung (601) und der bestimmten Parameterwerte; und
Senden der gemischten Audiodaten als besagte bearbeitete Audiodaten zu der einen oder den mehreren Telekommunikationsvorrichtungen (601) der drei oder mehr Telekommunikationsvorrichtungen (601-611).

3. Verfahren nach Anspruch 1, **dadurch gekennzeichnet, dass** das Verfahren weiterhin die folgenden Schritte umfasst:
Bestimmen einer Orientierung (P1-P4) des Gesichts eines Benutzers, der mit der ersten Telekommunikationsvorrichtung (601) verbunden ist, wo Audiodaten empfangen werden;
Anwenden der bestimmten Orientierung (P1-P4) des Gesichts als ein Parameterwert eines verständlichkeitsbezogenen Parameters, der einen Fokus der Benutzeraufmerksamkeit beschreibt.

4. Verfahren nach Anspruch 1, **dadurch gekennzeichnet, dass** der Schritt des Verbindens drei oder mehr Telekommunikationsvorrichtungen (601-611) mit der Audiokommunikation (6) weiterhin den folgenden Schritt umfasst:
beim Verbinden einer Telekommunikationsvorrichtung (601) mit der Audiokommunikation (6), Senden einer Mitteilungsnachricht an eine oder mehrere Telekommunikationsvorrichtungen (602-605), die schon mit der Audiokommunikation (6) verbunden worden sind, um die eine oder die mehreren Telekommunikationsvorrichtungen (602-605) über die Verbindung von besagter Telekommunikationsvorrichtung (601) mit der Audiokommunikation (6) zu benachrichtigen.

5. Verfahren nach Anspruch 4, **dadurch gekennzeichnet, dass** das Verfahren weiterhin den folgenden Schritt umfasst:
Senden besagter Mitteilungsnachricht in einer sequentiellen Reihenfolge an die eine oder die mehreren Telekommunikationsvorrichtungen (602-605), die schon mit der Audiokommunikation (6) verbunden worden sind, wobei die sequentielle Reihenfolge abhängt von dem einen oder den mehreren Attributen der einen oder der mehreren Telekommunikationsvorrichtungen (602-605).

6. Verfahren nach Anspruch 1, **dadurch gekennzeichnet, dass** das Verfahren weiterhin den folgenden Schritt umfasst:
Steuern einer Verbindung einer Telekommunikationsvorrichtung (601) mit der Audiokommunikation (6) mittels einer positiven Liste, welche die Telekommunikationsvorrichtungen (601-611) spezifiziert, die autorisiert sind zum Verbundenwerden mit der Audiokommunikation (6), und/oder einer negativen Liste, welche die Telekommunikationsvorrichtungen (601-611) spezifiziert, die nicht autorisiert sind zum Verbundenwerden mit der Audiokommunikation (6).

7. Verfahren nach Anspruch 1, **dadurch gekennzeichnet, dass** das Verfahren weiterhin die folgenden Schritte umfasst:
Zuweisen einer Priorität für eine Telekommunikationsvorrichtung (601) der drei oder mehr Telekommunikationsvorrichtungen (601-611); und
Priorisieren der Bearbeitung und/oder der Verteilung der Audiodaten von der Telekommunikationsvorrichtung (601), der der Priorität zugewiesen worden ist in Hinblick auf die Audiodaten der anderen Telekommunikationsvorrichtungen (602-611) der zwei oder mehr Telekommunikationsvorrichtungen (601-611).

8. Verfahren nach Anspruch 1, **dadurch gekennzeichnet, dass** das Verfahren weiterhin die folgenden Schritte umfasst:
auf eine erste Anforderung von einer Telekommunikationsvorrichtung (601) der drei oder mehr Telekommunikationsvorrichtungen (601-611), temporäres Splitting der Lautsprechergruppe (CR11) der zwei oder mehr Lautsprechergruppen (CR11, CR12, CR13), mit denen die Telekommunikationsvorrichtung (601) verbunden ist, in zwei oder mehr Lautsprecher-Untergruppen; und
auf eine zweite Anforderung von der Telekommunikationsvorrichtung (601) der drei oder mehr Telekommunikationsvorrichtungen (601-611) oder nach einer vorbestimmte Zeitspanne nach dem besagten Gruppensplitting, Wiederverbinden der zwei oder mehr Lautsprecher-Untergruppen in die ursprünglich vorhandene einzelne Lautsprechergruppe (CR11).

9. Verfahren nach Anspruch 1, **dadurch gekennzeichnet, dass** das Verfahren weiterhin die folgenden Schritte umfasst:
Aufzeichnen der Audiodaten, die von einer oder mehreren (601-605) der drei oder mehr Telekommunikationsvorrichtungen (601-611) empfangen worden sind; und
auf Anfrage von einer Telekommunikationsvorrichtung (601) der drei oder mehr Telekommunikationsvorrichtungen (601-611), Bereitstellen eines vordefinierten Teils der Audiodaten für die anfordernde Telekommunikationsvorrichtung (601).

10. Mehrfachlautsprecher-Kommunikationsumgebungseinheit (7) zum Bereitstellen einer Audiokommunikation (6) zwischen drei oder mehr Telekommunikationsvorrichtungen (601-611), wobei die Audiokommunikation (6) einen gleichzeitigen, bidirektionalen Austausch von Audiodaten zwischen den drei oder mehr Telekommunikationsvorrichtungen (601-611) gestattet, wobei die Mehrfachlautsprecher-Kommunikationsumgebungseinheit (7) eine Endgerätzuweisungseinheit (71) umfasst, die ausgelegt ist zum Verbinden der drei oder mehr Telekommunikationsvorrichtungen (601-611) mit der Audiokommunikation (6); eine Gruppenerstellungseinheit (74), die ausgelegt ist zum Gruppieren der drei oder mehr Telekommunikationsvorrichtungen (601-611) in zwei oder mehr Lautsprechergruppen (CR11, CR12, CR13) in Abhängigkeit der bestimmten Parameterwerte und, auf Anfordern von einer Telekommunikationsvorrichtung (601) der drei oder mehr Telekommunikationsvorrichtungen (601-611), Ändern einer Verbindung der anfordernden Telekommunikationsvorrichtung (601) mit einer ersten Lautsprechergruppe (CR11) der zwei oder mehr Lautsprechergruppen (CR11, CR12, CR13) hin zu einer Verbindung der anfordernden Telekommunikationsvorrichtung (601) mit einer zweiten Lautsprechergruppe (CR12) der zwei oder mehr Lautsprechergruppen (CR11, CR12, CR13); und eine Verständlichkeitskontrolleinheit (73), die ausgelegt ist zum Bestimmen, für die drei oder mehr Telekommunikationsvorrichtungen (601-611), von Parameterwerten von einem oder mehreren Parametern, die mit Verständlichkeit zu tun haben, wobei der Begriff Verständlichkeit so gemeint ist, dass er die Tatsache ausdrückt, dass Audiodaten/-signale, zum Beispiel Lautsprecherstimmen und andere akustische Informationen verständlich sind, d. h. klar dargestellt werden in einer bidirektionalen Kommunikation, sodass die Audiodaten/-signale von Zuhörern leicht verstanden, d. h. erhalten, werden können;ausgelegt zum Bestimmen, wenn Audiodaten von einer ersten Telekommunikationsvorrichtung (601) der drei oder mehr Telekommunikationsvorrichtungen (601-611) erhalten werden, einer Beziehung der ersten Telekommunikationsvorrichtung (601) zu den zwei oder mehr Lautsprechergruppen (CR11, CR12, CR13), und Bearbeiten der Audiodaten, die von der ersten Telekommunikationsvorrichtung (601) empfangen worden sind, und Verteilen der bearbeiteten Audiodaten auf ein oder mehr Telekommunikationsvorrichtungen (601-611) der drei oder mehr Telekommunikationsvorrichtungen (601-611) in Abhängigkeit von der bestimmten Beziehung der ersten Telekommunikationsvorrichtung (601) und von den bestimmten Parameterwerten; **gekennzeichnet durch** das Bereitstellen einer Verständlichkeitskontrolle für die Audiokommunikation mittels einer Entscheidung zum Gruppieren von Lautsprechern in Lautsprechergruppen auf Grundlage einer Messung eines Verständlichkeitskoeffizienten, umfassend: die Anzahl von Unterbrechungen pro Sekunde, die spektrale Wahrnehmbarkeit von einzelnen Vokalen und Konsonanten, die Verständlichkeit von Worten oder Sätzen, das Lautstärkeverhältnis von Vordergrund- zu Hintergrundlautsprechern.

11. Mehrfachlautsprecher-Kommunikationsumgebungseinheit (7) nach Anspruch 10, **dadurch gekennzeichnet, dass** die Mehrfachlautsprecher-Kommunikationsumgebungseinheit (7) weiterhin umfasst eine Teilnehmermitteilungseinheit (72), die ausgelegt ist zum Senden, beim Verbinden einer Telekommunikationsvorrichtung (601) mit der Audiokommunikation (6), einer Mitteilungsnachricht an eine oder mehrere Telekommunikationsvorrichtungen (602-605), die schon mit der Audiokommunikation (6) verbunden worden sind, um die eine oder die mehreren Telekommunikationsvorrichtungen (602-605) über die Verbindung von besagter Telekommunikationsvorrichtung (601) mit der Audiokommunikation (6) zu benachrichtigen.

12. Mehrfachlautsprecher-Kommunikationsumgebungseinheit (7) nach Anspruch 10, **dadurch gekennzeichnet, dass** die Mehrfachlautsprecher-Kommunikationsumgebungseinheit (7) weiterhin umfasst eine Gruppenmitgliedschaftseinheit (75), die angepasst ist an das Steuern einer Verbindung einer Telekommunikationsvorrichtung (601) mit der Audiokommunikation (6) mittels einer positiven Liste, welche die Telekommunikationsvorrichtungen (601-611) spezifiziert, die autorisiert sind zum Verbundenwerden mit der Audiokommunikation (6), und/oder einer negativen Liste, welche die Telekommunikationsvorrichtungen (601-611) spezifiziert, die nicht autorisiert sind zum Verbundenwerden mit der Audiokommunikation (6).

## Revendications

1. Procédé destiné à assurer une communication audio (6) entre au moins trois appareils de télécommunication (601-611) dans lequel la communication audio (6) permet un échange bidirectionnel simultané de données audio entre les trois appareils de télécommunication ou plus (601-611), le procédé comprenant les étapes suivantes :
associer les trois appareils de télécommunication ou plus (601-611) à la communication audio (6) ;
déterminer, pour les trois appareils de télécommunication ou plus (601-611), des valeurs de paramètre d'un ou plusieurs paramètres relatifs à la clarté, le terme clarté visant à exprimer le fait que les données/signaux audio, par exemple les voix des locuteurs et autres informations acoustiques, sont clairs, c'est-à-dire présentés clairement, dans une communication bidirectionnelle de sorte que les données/signaux audio peuvent être facilement compris, c'est-à-dire perçus, par les personnes qui écoutent ;
regrouper les trois appareils de télécommunication ou plus (601-611) en au moins deux groupes de locuteurs (CR11, CR12, CR13) en fonction des valeurs de paramètre déterminées ;
sur demande d'un appareil de télécommunication (601) parmi les trois appareils de télécommunication ou plus (601-611), transformer l'association de l'appareil de télécommunication demandeur (601) à un premier groupe de locuteurs (CR11) parmi les deux groupes de locuteurs ou plus (CR11, CR12, CR13) en une association de l'appareil de télécommunication demandeur (601) à un deuxième groupe de locuteurs (CR12) parmi les deux groupes de locuteurs ou plus (CR11, CR12, CR13) ;
à la réception de données audio en provenance d'un premier appareil de télécommunication (601) parmi les trois appareils de télécommunication ou plus (601-611), déterminer une relation du premier appareil de télécommunication (601) avec les deux groupes de locuteurs ou plus (CR11, CR12, CR13) ; et
traiter les données audio reçues en provenance du premier appareil de télécommunication (601) et distribuer les données audio traitées à un ou plusieurs appareils de télécommunication (601-611) parmi les trois appareils de télécommunication ou plus (601-611) en fonction de la relation déterminée du premier appareil de télécommunication (601) et des valeurs de paramètre déterminées ;
le procédé étant **caractérisé en ce qu'**il fournit un contrôle de clarté pour la communication audio par le biais d'une décision de regrouper les locuteurs en groupes de locuteurs sur la base de la mesure d'un coefficient de compréhensibilité comprenant : le nombre d'interruptions par seconde, la perceptibilité spectrale des voyelles et consonnes individuelles, la perceptibilité des mots ou des phrases, le rapport de sonie entre les locuteurs de premier plan et d'arrière-plan.

2. Procédé selon la revendication 1, **caractérisé en ce que** les étapes de traitement des données audio reçues en provenance du premier appareil de télécommunication (601) et de distribution des données audio traitées à un ou plusieurs des appareils de télécommunication (601-611) parmi les trois appareils de télécommunication ou plus (601-611) comprennent en outre les étapes suivantes :
régler les niveaux sonores des données audio reçues en provenance du premier appareil de télécommunication (601) et des données audio reçues en provenance des autres appareils de télécommunication (602-611) parmi les trois appareils de télécommunication ou plus (601-611) sur des niveaux différents et mélanger les données audio réglées, les différents niveaux étant déterminés en prenant en compte la relation déterminée du premier appareil de télécommunication (601) et les valeurs de paramètre déterminées ; et
envoyer les données audio mélangées comme lesdites données audio traitées à un ou plusieurs appareils de télécommunication (601-611) parmi les trois appareils de télécommunication ou plus (601-611).

3. Procédé selon la revendication 1, **caractérisé en ce que** le procédé comprend en outre les étapes suivantes :
déterminer une orientation (P1-P4) du visage d'un utilisateur associé au premier appareil de télécommunication (601) en provenance duquel les données audio sont reçues ;
appliquer l'orientation déterminée (P1-P4) du visage comme valeur de paramètre d'un paramètre relatif à la clarté décrivant une concentration de l'attention de l'utilisateur.

4. Procédé selon la revendication 1, **caractérisé en ce que** l'étape d'association des trois appareils de télécommunication ou plus (601-611) à la communication audio (6) comprend en outre l'étape suivante :
lors de l'association d'un appareil de télécommunication (601) à la communication audio (6), envoyer un message de notification à un ou plusieurs appareils de télécommunication (602-605) qui ont déjà été associés à la communication audio (6) de façon à notifier le ou les appareils de télécommunication (602-605) de l'association dudit appareil de télécommunication (601) à la communication audio (6).

5. Procédé selon la revendication 4, **caractérisé en ce que** le procédé comprend en outre les étapes suivantes :
envoyer ledit message de notification dans un ordre séquentiel à l'appareil ou aux appareils de télécommunication (602-605) qui ont déjà été associés à la communication audio (6), l'ordre séquentiel étant fonction d'un ou plusieurs attributs du ou des appareils de télécommunication (602-605).

6. Procédé selon la revendication 1, **caractérisé en ce que** le procédé comprend en outre les étapes suivantes :
contrôler l'association d'un appareil de télécommunication (601) à la communication audio (6) au moyen d'une liste positive spécifiant les appareils de télécommunication (601-611) autorisés à être associés à la communication audio (6) et/ou d'une liste négative spécifiant les appareils de télécommunication (601-611) non autorisés à être associés à la communication audio (6).

7. Procédé selon la revendication 1, **caractérisé en ce que** le procédé comprend en outre les étapes suivantes :
allouer une priorité à un appareil de télécommunication (601) parmi les trois appareils de télécommunication ou plus (601-611) ; et
donner la priorité au traitement et/ou à la distribution des données audio en provenance de l'appareil de télécommunication (601) auquel a été allouée la priorité par rapport aux données audio des autres appareils de télécommunication (602-611) parmi les deux appareils de télécommunication ou plus (601-611).

8. Procédé selon la revendication 1, **caractérisé en ce que** le procédé comprend en outre les étapes suivantes :
sur une première demande d'un appareil de télécommunication (601) parmi les trois appareils de télécommunication ou plus (601-611), diviser temporairement le groupe de locuteurs (CR11) parmi les deux groupes de locuteurs ou plus (CR11, CR12, CR13) auxquels l'appareil de télécommunication (601) est associé en au moins deux sous-groupes de locuteurs ; et
sur une deuxième demande de l'appareil de télécommunication (601) parmi les trois appareils de télécommunication ou plus (601-611) ou à l'issue d'un laps de temps prédéterminé après ladite division du groupe, regrouper les deux sous-groupes de locuteurs ou plus au sein du groupe de locuteurs unique initialement existant (CR11).

9. Procédé selon la revendication 1, **caractérisé en ce que** le procédé comprend en outre les étapes suivantes :
enregistrer les données audio reçues en provenance d'un ou plusieurs (601-605) des trois appareils de télécommunication ou plus (601-611) ; et
sur demande d'un appareil de télécommunication (601) parmi les trois appareils de télécommunication ou plus (601-611), fournir une partie prédéfinie des données audio à l'appareil de télécommunication demandeur (601).

10. Unité d'environnement de communication multilocuteurs (7) destinée à assurer une communication audio (6) entre au moins trois appareils de télécommunication (601-611) par laquelle la communication audio (6) permet un échange bidirectionnel simultané de données audio entre les trois appareils de télécommunication ou plus (601-611), l'unité d'environnement de communication multilocuteurs (7) comprenant une unité d'allocation de terminal (71) adaptée pour associer les trois appareils de télécommunication ou plus (601-611) à la communication audio (6) ; une unité de création de groupe (74) adaptée pour regrouper les trois appareils de télécommunication ou plus (601-611) en deux groupes de locuteurs ou plus (CR11, CR12, CR13) en fonction des valeurs de paramètre déterminées et, sur demande d'un appareil de télécommunication (601) parmi les trois appareils de télécommunication ou plus (601-611), transformer l'association de l'appareil de télécommunication demandeur (601) à un premier groupe de locuteurs (CR11) parmi les deux groupes de locuteurs ou plus (CR11, CR12, CR13) en une association de l'appareil de télécommunication demandeur (601) à un deuxième groupe de locuteurs (CR12) parmi les deux groupes de locuteurs ou plus (CR11, CR12, CR13) ; et une unité de contrôle de clarté (73) adaptée pour déterminer, pour les trois appareils de télécommunication ou plus (601-611), des valeurs de paramètre d'un ou plusieurs paramètres relatifs à la clarté, le terme clarté visant à exprimer le fait que les données/signaux audio, par exemple les voix des locuteurs et autres informations acoustiques, sont clairs, c'est-à-dire présentés clairement, dans une communication bidirectionnelle de sorte que les données/signaux audio peuvent être facilement compris, c'est-à-dire perçus, par les personnes qui écoutent, adaptée pour déterminer, lors de la réception de données audio en provenance d'un premier appareil de télécommunication (601) parmi les trois appareils de télécommunication ou plus (601-611), une relation du premier appareil de télécommunication (601) avec les deux groupes de locuteurs ou plus (CR11, CR12, CR13), et traiter les données audio reçues en provenance du premier appareil de télécommunication (601) et distribuer les données audio traitées à un ou plusieurs appareils de télécommunication (601-611) parmi les trois appareils de télécommunication ou plus (601-611) en fonction de la relation déterminée du premier appareil de télécommunication (601) et des valeurs de paramètre déterminées ; **caractérisée en ce qu'**elle fournit un contrôle de clarté pour la communication audio par le biais d'une décision de regrouper les locuteurs en groupes de locuteurs sur la base de la mesure d'un coefficient de compréhensibilité comprenant : le nombre d'interruptions par seconde, la perceptibilité spectrale des voyelles et consonnes individuelles, la perceptibilité des mots ou des phrases, le rapport de sonie entre les locuteurs de premier plan et d'arrière-plan.

11. Unité d'environnement de communication multilocuteurs (7) selon la revendication 10, **caractérisée en ce que** l'unité d'environnement de communication multilocuteurs (7) comprend en outre une unité de notification d'abonné (72) adaptée pour envoyer, lors de l'association d'un appareil de télécommunication (601) à la communication audio (6), un message de notification à un ou plusieurs appareils de télécommunication (602-605) qui ont déjà été associés à la communication audio (6) de façon à notifier le ou les appareils de télécommunication (602-605) de l'association dudit appareil de télécommunication (601) à la communication audio (6).

12. Unité d'environnement de communication multilocuteurs (7) selon la revendication 10, **caractérisée en ce que** l'unité d'environnement de communication multilocuteurs (7) comprend en outre une unité d'affiliation à un groupe (75) adaptée pour contrôler l'association d'un appareil de télécommunication (601) à la communication audio (6) au moyen d'une liste positive spécifiant les appareils de télécommunication (601-611) qui sont autorisés à être associés à la communication audio (6) et/ou d'une liste négative spécifiant les appareils de télécommunication (601-611) qui ne sont pas autorisés à être associés à la communication audio (6).
